(19) Europäisches Patentamt
European Patent Office
Office européen des brevets

(11) EP 0 826 651 B1

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(51) Int Cl.[7]: **C04B 41/87**

(21) Anmeldenummer: **97114417.5**

(22) Anmeldetag: **21.08.1997**

(54) **Verfahren zur Herstellung eines Oxidationsschutzes für poröse Keramiken auf der Basis von SiC und Si3N4**

Method for producing an oxidation protection for porous ceramics based on SiC and Si3N4

Procédé de production d'une protection anti-oxidation pour des céramiques poreux à base de SiC et Si3N4

(84) Benannte Vertragsstaaten:
**AT BE ES FR GB IT LU NL**

(30) Priorität: **28.08.1996 DE 19634855**

(43) Veröffentlichungstag der Anmeldung:
**04.03.1998 Patentblatt 1998/10**

(73) Patentinhaber: **THE MORGAN CRUCIBLE COMPANY PLC**
**Windsor, Berkshire SL4 1EP (GB)**

(72) Erfinder: **Sonntag, Andreas, Dr.-Ing.**
**83512 Wasserburg (DE)**

(74) Vertreter: **Pfenning, Meinig & Partner**
**Mozartstrasse 17**
**80336 München (DE)**

(56) Entgegenhaltungen:
**WO-A-93/17968** **US-A- 5 268 199**

- **DATABASE WPI Section Ch, Week 9648 Derwent Publications Ltd., London, GB; Class L02, AN 96-484218 XP002048911 & SU 1 781 995 A (KHARK POLY) , 10.März 1996**
- **PATENT ABSTRACTS OF JAPAN vol. 017, no. 298 (M-1425), 8.Juni 1993 -& JP 05 023801 A (HITACHI METALS LTD), 2.Februar 1993,**
- **MANOCHA L M ET AL: "STUDIES ON SOLUTION-DERIVED CERAMIC COATINGS FOR OXIDATION PROTECTION OF CARBON-CARBON COMPOSITES" CARBON, Bd. 33, Nr. 4, 1.Januar 1995, Seiten 435-440, XP000517502**
- **POPE E J A ET AL: "SOL-GEL ALUMINA-COATED CARBON FILM" JOURNAL OF THE AMERICAN CERAMIC SOCIETY, Bd. 74, Nr. 7, 1.Juli 1991, Seiten 1722-1724, XP000225766**
- **PATENT ABSTRACTS OF JAPAN vol. 013, no. 283 (C-612), 28.Juni 1989 & JP 01 076986 A (NGK INSULATORS LTD), 23.März 1989, & CHEMICAL ABSTRACTS, vol. 111, no. 16, 16.Oktober 1989 Columbus, Ohio, US; abstract no. 139433x, XP000155509**
- **CHEMICAL ABSTRACTS, vol. 115, no. 24, 16.Dezember 1991 Columbus, Ohio, US; abstract no. 261704j, XP000318769 & YAMAMOTO O ET AL: "Coating of carbon materials with zirconia by sol-gel method" NIPPON KAGAKU KAISHI, Nr. 10, 1991, Seiten 1326-1331,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 826 651 B1

Printed by Jouve, 75001 PARIS (FR)

## Beschreibung

Die Erfindung betrifft ein Infiltrationsverfahren zur Herstellung eines Oxidationschutzes für poröse Keramiken auf der Basis von SiC und $Si_3N_4$.

Keramiken auf der Basis von Siliciumcarbid (SiC) und Siliciumnitrid ($Si_3N_4$) zeichnen sich durch ihre Hochtemperaturbeständigkeit, eine sehr gute Temperaturwechselbeständigkeit, chemische Stabilität und hohe Festigkeit aus. Die herausragenden chemischen und physikalischen Beständigkeiten dieser Nichtoxidkeramiken bleiben auch bei sehr hohen Temperaturen erhalten, d.h. die Keramiken sind auch unter hohen mechanischen Lasten bei hohen Temperaturen formstabil.

Keramiken auf der Basis von SiC und $Si_3N_4$ finden daher insbesondere im Bereich der Hochtemperaturtechnik als sogenannte Brennhilfsmittel in Form von hoch belastbaren Balken, Rollen, Platten, Stützen und kompletten Brenngestellkonstruktionen etc. ihre Anwendung.

Als SiC-Keramiken seien hier das siliciuminfiltrierte Siliciumcarbid (SiSiC, dichte Keramik ohne Porosität) und das rekristallisierte SiC (R-SiC, poröse Keramik mit ungefähr 10 bis 15 % offener Porosität) sowie das nitridgebundene oder auch oxinitridgebundene SiC (N-SiC, poröse Keramik mit ungefähr 10 bis 15 % offener Porosität) genannt. Das SiSiC ist bedingt durch den Schmelzpunkt der metallischen Si-Phase bis max. 1350°C dauerhaft einsetzbar. Für Temperaturen oberhalb 1400°C wird daher bevorzugt das R-SiC oder das N-SiC eingesetzt. Die Anwendungsgrenztemperatur dieser SiC-Keramiken liegt bei sauerstoffhaltigen Atmosphären für das R-SiC bei ca. 1650°C, in inerten Atmosphären sogar oberhalb 2000°C. Das N-SiC kann unter oxidierenden Atmosphären bis ca. 1450°C eingesetzt werden. Herstellungsbedingt sind beide Keramiken of fenporöse Werkstoffe. Entscheidend für die maximale Einsatzdauer und maximale Einsatztemperatur dieser Keramiken ist die an sauerstoffhaltigen Atmosphären stattfindende Oxidation der SiC-Oberfläche, die bedingt durch die offene Porosität den gesamten Querschnitt des Keramikbauteiles betreffen:

$$SiC + 2\ O_2 <-> SiO_2 + CO_2$$

$$Si_3N_4 + (3+x/2)\ O_2 <-> 3\ SiO_2 + 4\ NO_x$$

Durch die Oxidation wird die SiC- und die $Si_3N_4$-Oberfläche mit einer $SiO_2$-Schicht überzogen, welche überwiegend kristallin als Cristoballit vorliegt. Im Falle einer isothermen Oxidation liegt auf der SiC- bzw.

$Si_3N_4$-Oberfläche eine festhaftende und geschlossene $SiO_2$-Schutzschicht vor, welche eine weitere Oxidation der Keramik verlangsamt. Der weitere Oxidationsfortschritt wird durch Interdiffusionsprozesse des $O_2$ und $CO_2$/CO bzw. $NO_x$ innerhalb der $SiO_2$-Schicht bestimmt.

Im Falle einer zyklischen Temperaturbelastung und somit zyklischer Oxidation machen sich die unterschiedlichen Wärmeausdehnungsverhalten von SiC bzw. $Si_3N_4$ und $SiO_2$ dahingehend bemerkbar, daß die $SiO_2$-Schicht rissig wird und somit die frische SiC-Oberfläche einem erneuten ungehinderten Oxidationsangriff beim Hochtemperatureinsatz zugänglich gemacht wird. Eine Verlangsamung der Oxidation durch eine geschlossene Schutzschichtbildung, wie sie sich bei einem isothermen Hochtemperatureinsatz zeigt, ist' im zyklischen Hochtemperaturbetrieb nicht gegeben. Folglich ist hier der Oxidationsfortschritt ungleich höher.

Die Oxidation des SiC/$Si_3N_4$ führt insbesondere bei zyklischer Temperaturbelastung zur Schädigung der SiC/ $Si_3N_4$-Matrix. Dies äußert sich beim R-SiC in mikroskopisch erkennbaren Stegrissen, die eindeutig von oxidierten Porenoberflächen ausgehen und als direkte Folge zu einem deutlichen Festigkeitsabfall des gesamten Bauteils führen. Es steht fest, daß der Oxidationsfortschritt die Lebensdauer der R-SiC-Bauteile im Hochtemperatureinsatz bestimmt. Im Falle von N-SiC oder reaktionsgebundenem $Si_3N_4$ (RBSN) äußert sich eine fortgeschrittene Oxidation durch ein Aufblähen der Bauteile und einen krassen Abfall in der Festigkeit.

Um die Oxidation von porösen SiC/$Si_3N_4$-Werkstoffen zu verlangsamen, wurden unterschiedliche Ansätze verfolgt. Aus der DE 43 09 267 ist die Imprägnierung von keramischen Formkörpern mit glasurbildenden Salzlösungen und aus J. Schlichting et al., "$GeO_2$-$SiO_2$ glasses from gels to increase the oxidation resistance of porous silicon containing ceramics", Journal of Non-Crystalline Solids, 48, 1982, 184-195 mit glasurbildenden Gelen bekannt. Beiden Techniken ist gemeinsam, daß glasbildende Oxidkombinationen in das poröse SiC infiltriert werden. Nach einer thermischen Nachbehandlung trocknen die Lösungen ein und belegen den inneren Porenraum mit den entsprechenden Oxidkombinationen, welche bei einer weiteren Temperaturbehandlung in einen amorphen, d.h. nichtkristallinen Zustand übergehen und die SiC-Oberflächen überziehen. Auf diese Weise läßt sich die Lebensdauer der Formteile typischerweise um 50 % steigern. Bezeichnend ist hier, daß durch die Einführung der glasbildenden Oxide in die Porenräume des SiC offensichtlich die Cristoballitbildung auf der SiC-Oberfläche weitestgehend unterdrückt wurde.

Nachteilig bei diesen Verfahren ist jedoch, daß die Wärmeausdehnungskoeffizierten der jeweils gewählten glasbildenden Oxidkombinationen mit ca. 7 bis $9 \times 10^{-6}\ K^{-1}$ (RT-$T_g$) deutlich oberhalb des Wärmeausdehnungskoeffizierten von SiC mit ca. 4,5x$10^{-6}$ $K^{-1}$ (RT-1000°C) liegen. Temperaturzyklen führen auch hier zu lokalen Spannungen zwischen dem SiC und der gebildeten Glasbeschichtung, was wiederum Abplatzungen der Schutzschicht und somit ein Freilegen frischer SiC-Oberfläche bewirkt. Außerdem führt das typische Erweichen der Glasphase oberhalb der Glastransformationstemperatur $T_g$ zu einer mit steigender Temperatur abfallenden Viskosität der Glasschmelze. Die Viskositätserniedrigung der Glasschmelze führt unmittelbar zu einer erhöhten Interdiffusion der oxidationsbestimmenden Komponenten $O_2$ und $CO/CO_2$. Dieses äußerst sich bei Temperaturen von z.B. oberhalb 1500°C in einer Glasschaumbildung auf den SiC-Oberflächen, die auf die erhöhte Oxidationsgeschwindigkeit und somit Glasbildung zurückzuführen ist.

Ein weiterer möglicher Oxidationsschutz für R-SiC kann durch Beschichtung von R-SiC-Bauteiloberflächen mittels Vakuumplasmaspritztechnik erreicht werden, welche zu einer maximalen Lebensdauerverlängerung beschichteter Bauteile im Vergleich zu unbeschichteten Bauteilen von maximal 30 % führt (H. Rump et al., "Plasmabeschichtungen - Oxidationsschutz für R-SiC Brennhilfsmittel", Keramische Zeitschrift, 47, Nr. 4, 1995, 284-286). Hierbei werden dichte oxidkeramische Schutzschichten aus $Al_2O_3$ und/oder $ZrO_2$ auf die Bauteiloberflächen aufgespritzt, welche das Eindiffundieren bzw. Einströmen von gasförmigem Sauerstoff verhindern sollen. Dichte Oxidschichten können hier jedoch nur mittels der relativ teuren Vakuumplasmaspritztechnik erzielt werden, der gesamte innere Porenraum kann nicht beschichtet werden. Ein weiterer Nachteil ist, daß Hohlkörper wie Rollen oder Balken nur von außen beschichtet werden können und somit der Sauerstoffangriff ungehindert durch die Innenräume fortschreiten kann.

Der Erfindung liegt die Aufgabe zugrunde, für poröse Keramiken auf der Basis von SiC oder $Si_3N_4$ ein Verfahren zur Herstellung eines Oxidationsschutzes zu schaffen, welcher für Temperaturen bis mindestens 1650°C auch bei zyklischen Temperaturbeanspruchungen dauerhaft beständig ist und über den gesamten Temperatureinsatzbereich ein dem keramischen Ausgangsmaterial angepaßtes Wärmeausdehnungsverhalten zeigt.

Diese Aufgabe wird gelöst durch die kennzeichnenden Merkmale des Anspruchs 1. Die Unteransprüche zeigen vorteilhafte Ausgestaltungen und Weiterbildungen auf.

Gemäß Anspruch 1 wird in die offenen Poreninnenräume der Keramik auf der Basis von SiC oder $Si_3N_4$ ein mindestens eine Metallkomponente enthaltendes Sol infiltriert, aus diesem Sol ein Gel gebildet (Sol-Gel-Prozeß) und die so präparierte Keramik einer Hochtemperaturbehandlung unterzogen, wobei das Sol durch ein Vakuum- oder Druckinfiltrationsverfahren in die Poreninnenräume eingebracht wird, die Metallkomponente in einer Konzentration von 3 % bis 30 % im Sol vorliegt und das Sol auf eine Viskosität zwischen 10 und 30 mPas bei einem Schergefälle von 500 1/s eingestellt wird.

Der erfindungsgemäße Oxidationsschutz eignet sich insbesondere für Keramiken aus rekristallisiertem SiC (R-SiC), aus nitridgebundenem oder oxinitridgebundenem SiC (N-SiC) sowie aus reaktionsgebundenem $Si_3N_4$ (RBSN), beispielsweise in Gestalt von Formkörpern wie Platten, Rohren, Stangen, Trägern usw.

Vorteilhafterweise wird der Sol-Infiltrations/Gel-Bildungszyklus vor der Hochtemperaturbehandlung mehrfach wiederholt, um auf diese Weise eine größere Menge der Metallkomponente in die Poreninnenräume einbringen zu können.

Die Hochtemperaturbehandlung wird bevorzugt unter oxidierender Atmosphäre bei Temperaturen zwischen 1000 und 1700 °C durchgeführt.

Bei der Hochtemperaturbehandlung wird infolge einer Festkörperreaktion zwischen der Gelphase und der SiC-bzw. $Si_3N_4$-Oberfläche eine kristalline bzw. teilkristalline Oxidationsschutzschicht gebildet, die über den gesamten Anwendungstemperaturbereich ein dem SiC bzw. $Si_3N_4$ angepaßtes Wärmeausdehnungsverhalten zeigt, und so lokale thermisch induzierte Spannungen im zyklischen Temperaturbetrieb unterbindet. Durch die rein kristalline Festkörperschutzschicht werden die Interdiffusionsprozesse des $O_2$ und $CO/CO_2$ bzw. $NO_x$ verringert, da diese in einer kristallinen Schutzschicht ungleich langsamer ablaufen als in einer schmelzflüssigen amorphen Glasphase. Folglich führt die kristalline Schutzschicht im Hochtemperatureinsatz zu einem vergleichsweisen langsameren Oxidationsfortschritt. Die erfindungsgemäßen oxidischen Schutzschichtsysteme gewährleisten überraschenderweise einen dauerhaften Oxidationsschutz für offenporöses R-SiC, N-Si-C und RBSN selbst im zyklischen Hochtemperatureinsatz.

Während des Hochtemperatureinsatzes wird das auf der SiC- bzw. $Si_3N_4$-Oberfläche entstehende $SiO_2$ in Form einer in-situ-Festkörperreaktion zu einer neuen refraktären Festkörperphase umgewandelt. Erfindungsgemäß wird die beim ersten Hochtemperatureinsatz unter $O_2$-Einfluß sich unweigerlich auf der SiC- bzw. $Si_3N_4$-Oberfläche bildende $SiO_2$-Schicht direkt am Entstehungsort mit einer weiteren Oxidkomponente kombiniert und zu einer kristallinen Festkörperphase überführt. Die dazu benötigte Oxidkomponente wird dabei vor dem Hochtemperatureinsatz durch eine mittels Sol-Gel-Technik hergestellte Flüssigphase über ein Vakuum-oder Druckinfiltrationsverfahren in den Poreninnenraum des offenporösen SiC-Werkstoffes eingebracht. Aus dem allgemeinen Stand der Technik ist die prinzipielle Vorgehensweise der Sol-Gel-Technik zu entnehmen. Die verwendeten Sole können dabei (A) durch die Hydrolyse von Alkoxiden hergestellt werden

$$\text{(A)} \qquad M\text{-}(OR)_x + y\, H_2O \text{ <-> } M\text{-}(OH)_y + x\, R\text{-}OH.$$

Ein weiterer Weg zur Herstellung eines Sols kann durch die Dispergierung von Metallhydroxidpulvern und/oder teilhydroxierten Metalloxidpulvern in Wasser beschritten werden (B). Dabei wird ein bereits über den unter (A) beschriebenen Alkoxidprozeß hergestelltes Metallkomponente eingetrocknet und bei Bedarf unter Zugabe eines geeigneten Elektrolyten in Wasser in . Form von feinsten Teilchen bzw. Kolloiden dispergiert.

$$\text{(B)}\quad M\text{-}(OH)_2 + H_2O \overset{\text{Elektrolyt}}{<\!\!->} M\text{-}(OH)_{disp.}$$

Als geeignete Metallkomponenten finden bevorzugt AlOOH, $Zr(OH)_4$ oder Mischungen dieser Komponenten Verwendung.

Die für die Infiltration der offenporösen SiC- bzw $Si_3N_4$-Keramiken verwendeten Sole werden vorteilhafterweise so eingestellt, daß deren Viskosität zu einer vollständigen Befüllung der Porenräume führt und daß das Sol auch nach der Infiltration in diesem Porenraum festgehalten wird. Die Sole können anschließend eine sogenannte Polykondensation zu einem Gel durchlaufen, welche unmittelbar mit einem kontinuierlichen Anstieg der Viskosität des Sols verbunden ist. Die Viskosität und der Viskositätsanstieg, d.h. die Kinetik der Polykondensation des Sols, werden durch die Konzentration der Metallkomponente, die Temperatur sowie die Art und Weise des zugegebenen Elektrolyten beeinflußt. Beispielsweise kann die Polykondensation bei Temperaturen zwischen 30 und 110 °C für eine Dauer zwischen 30 Minuten und 5 Stunden erfolgen.

Hier hat sich überraschenderweise ein wesentlicher Vorteil der Sol-Gel-Technik im Vergleich zu z.B. Salzlösungen gezeigt, welche eine konstant bleibende und vergleichsweise niedrige Viskosität aufzeigen. Auch können mit der Sol-Gel-Technik im Vergleich zu Salzlösungen höhere Konzentrationen der Oxidkomponente in die flüssige Phase eingebracht werden. Die Konzentration der durch Sol-Gel-Technik in den Poreninnenraum eingebrachte Oxidkomponente ist daher im Vergleich zu analogen Salzlösungen vorteilhafterweise höher. Dadurch kann gewährleistet werden, daß nach anschließender Eintrocknung des Sols und Entwässerung der chemisch gebundenen Wassers des Hydroxids eine für die in-situ-Reaktion ausreichende Menge der Oxidkomponente vorliegt.

Für die nach der Gelierung in den Poren zurückbleibende Oxidationsschutzschichtkomponente für SiC und $Si_3N_4$ eignen sich erfindungsgemäß insbesondere die Systeme $Al_2O_3$ und $ZrO_2$.

Diese Oxide bilden mit dem durch die oberflächige Oxidation des SiC bzw. $Si_3N_4$ entstandenen $SiO_2$ über eine In-situ-Hochtemperaturreaktion die folgenden kristallinen Festkörperphasen:

(1) $2\ SiO_2 + 3\ Al_2O_3 <\!\!-> 3\ Al_2O_3 \cdot 2\ SiO_2$ (Mullit)

(2) $2\ SiO_2 + ZrO_2 <\!\!-> ZrSiO_4$ (Zirkon)

Die niedrigstschmelzenden Eutektika der Systeme liegen mit $T_{cut.,\ min}$ = 1595°C für $SiO_2 + Al_2O_3$ und $T_{cut.,\ min}$ = 1675°C für $SiO_2 + ZrO_2$ außerordentlich hoch und führen somit je nach maximaler Anwendungstemperatur zu der gewünschten hochtemperaturbeständigen kristallinen Oxidationsschutzschicht.

Für einen zyklischen Hochtemperatureinsatz ist es nun entscheidend, die lokalen, thermisch induzierten Grenzflächenspannungen zwischen Oxidationsschutzschicht und SiC- bzw. $Si_3N_4$-Grundkörper sowie einer $Si_3N_4$-Bindematrix zu minimieren.

Die Reaktionsprodukte der Oxidationsschutzschichten führen nun vorteilhafterweise zu Kristallsystemen, die mit ungefähr 4,0 - $5{,}5\times10^{-6}\ K^{-1}$ ($3\ Al_2O_3 \cdot 2\ SiO_2$, $ZrSiO_4$) einen ähnlichen Wärmeausdehnungskoeffizienten (RT-1000°C) wie SiC (4,5 - $4{,}8\times10^{-6}\ K^{-1}$). bzw. $Si_3N_4$ (3,2 - $3{,}6\times10^{-6}\ K^{-1}$) aufweisen.

Die angepaßten Wärmedehnungsverhalten der Oxidsysteme führen folglich zur Bildung einer weitestgehend rißfreien, geschlossenen und kristallinen Schutzschicht auf der SiC- bzw. $Si_3N_4$-Oberfläche selbst bei einem zyklischen Hochtemperatureinsatz der Keramiken.

Überraschenderweise kann durch die beschriebene Sol-Gel-Infiltrationstechnik eine ausreichende Menge der obengenannten in-situ gebildeten Kristallphasen im Poreninnenraum der R-SiC, N-SiC und RBSN Keramiken gebildet werden, so daß diese den erstrebten Hochtemperaturoxidationsschutz im zyklischen Hochtemperatureinsatz in einer erstaunlichen Ausgeprägtheit aufzeigen.

Nachfolgend wird die Erfindung anhand einiger Ausführungsbeispiele und Figuren näher beschrieben. Es zeigen:

Figur 1 die Gewichtszunahme unbehandelter und mit AlOOH-Sol infiltrierter R-SiC-Proben im zyklischen Oxidationstest bei 1400°C,

Figur 2 eine auflichtmikroskopische Aufnahme eines unbehandelten, nichtoxidierten R-SiC-Gefüges (50-fache Vergrößerung).

Figur 3 eine auflichtmikroskopische Aufnahme eines unbehandelten R-SiC-Gefüges nach 115 Hochtemperaturzyklen bei 1400°C (50-fache Vergrößerung).

Figur 4 eine auflichtmikroskopische Aufnahme eines zweifach mit AlOOH-infiltrierten R-SiC-Gefüges nach 185 Hochtemperaturzyklen bei 1400°C (50-fache Vergrößerung).

Figur 5 die Gewichtszunahme unbehandelter und mit AlOOH-Sol infiltrierter R-SiC-Proben im zyklischen Oxidationstest bei 1550°C,

Figur 6 die Gewichtszunahme unbehandelter und mit $Zr(OH)_4$-Sol infiltrierter R-SiC-Proben im zyklischen Oxidationstest bei 1700°C,

Figur 7 die Gewichtszunahme unbehandelter und mit AlOOH-Sol infiltrierter N-SiC und RBSN Proben im zyklischen Oxidationstest bei 1400°C.

Zunächst wird beispielhaft die Herstellung dreier Sole beschrieben, welche zur Infiltration im Rahmen einer erfindungsgemäßen Oxidationsschutzschichtbildung genutzt werden können.

1. Herstellung eines AlOOH-Sols durch Hydrolyse des Alkoxids Al-(sek.)-butylat in Wasser:

$$\text{Al-sek.-butylat} + H_2O \xleftrightarrow{\text{Temp./Katalyse + peptisierendes Anion}} AlOOH_{\text{Kolloid}} + \text{Butanol}$$

Der zur Hydrolyse benötigte Katalysator in Form von $HNO_3$ dient zugleich als Lieferant für das peptisierend wirkende Anion zur Stabilisierung der ALOOH-Kolloide, welche in überschüssigem Wasser das eigentliche Sol bilden. Das Butanol dampft im Laufe der Hydrolysereaktion bei ca. 80-90°C ab. Nach Ablauf der Reaktion liegt beispielsweise ein kolloidales Sol mit ca. 25% AlOOH entsprechend 14,7% $Al_2O_3$ vor.

2. Herstellung eines AlOOH-Sols durch Dispergierung von sauer peptisierten AlOOH-Partikeln, welche durch vorherige Alkoxid-Hydrolysereaktion hergestellt und eingetrocknet wurden:

$$\text{AlOOH-Pulver} + H2O \xleftrightarrow{\text{Elektrolyt}} AlOOH_{\text{Kolloid}}$$

Das im überschüssigen Wasser mit z.B. $HNO_3$ als Elektrolyt dispergierte AlOOH-Kolloidpulver kann in einer Konzentration von z.B. 28 % AlOOH entsprechend 16,5 % $Al_2O_3$ als kolloidales Sol vorliegen.

3. Herstellung eines $Zr(OH)_4$-Sols durch Hydrolyse des Alkoxids Zirkoniumbutylat in Wasser:

$$Zr\text{-}(OR)_4 + H_2O \xleftrightarrow{\text{Temp./Katalyse + peptisierendes Anion}} Zr(OH)_4 + \text{Butanol}$$

Zur Hydrolyse und Peptisierung werden analog der AlOOH-Herstellung Zusätze in Form von z.B. $HNO_3$ benötigt. Die im überschüssigen Wasser peptisierten $Zr(OH)_4$-Kolloide stellen das eigentliche Sol dar.

Die jeweiligen Sole werden vorteilhafterweise auf eine Viskosität von ca. 10 bis 300 mPas (gemessen bei einem Schergefälle von 500 1/s) eingestellt. Dies kann durch entsprechende Elektrolytzugabe und/oder Zeit und/oder

Temperatureinwirkung erfolgen, welche die Kinetik der Gelierung beeinflussen.

Es folgt die Infiltration der offenporösen Keramiken über ein Vakuumbehältnis. Dazu werden die Bauteile in einer Vakuumkammer plaziert, ein Unterdruck in der Kammer von ca. 100 mbar erzeugt und anschließend über den Unterdruck das Sol in die Vakuumkammer gezogen. Der evakuierte Poreninnenraum der Keramiken wird vollständig mit dem Sol gefüllt. Nach der Vakuumkammerbelüftung werden die infiltrierten Bauteile bei 60-110°C getrocknet. Zur Feststellung der eingebrachten $Al_2O_3$- bzw. $ZrO_2$-Menge in den Poreninnenraum werden Stichproben bei ca. 500°C zur vollständigen Austreibung des chemisch gebundenen Wassers ausgelagert.

Der Infiltrationsvorgang kann selbstverständlich wiederholt werden.

Das zyklische Hochtemperaturverhalten der infiltrierten R-SiC, N-SiC und RBSN Keramiken wurde mit denen unbehandelter Keramiken verglichen, indem Proben parallel einen Produktionsofen mit oxidierender Atmosphäre bei ca. 1400°C, 1550°C und 1700°C durchliefen. Vergleichend wurden die Gewichtszunahmen nach jedem Zyklus und die 4-Punkt-Biegefestigkeiten anhand von Stichproben gemessen sowie Rasterelektronen- und Auflichtmikroskopie anhand von Stichproben angefertigt.

**Zyklische Oxidationstests von R-SiC bei 1400°C**

Die R-SiC-Proben wurden einfach, zweifach und dreifach mit AlOOH-Sol, dispergiert aus kolloidalem AlOOH-Pulver (AlOOH-Konzentration 10%), infiltriert. Nach jeder Infiltration wurden die Proben bei 110°C und anschließend bei 500°C getrocknet. Der Trocknungsvorgang bei 500°C diente der Bestimmung des in den Porenraum eingebrachten $Al_2O_3$-Anteiles. Die Gewichtszunahmen betrugen bei einfacher Infiltration 0,45 %, bei zweifacher Infiltration 0,95 % und bei dreifacher Infiltration 1,3 %.

Die Bauteile wurden mehrfachen Temperaturzyklen bei 1400°C mit 3,3 h Haltezeit ausgesetzt. Figur 1 zeigt den jeweiligen Oxidationsverlauf anhand der gemessenen Gewichtszunahmen pro Hochtemperaturzyklus sowie stichprobenhaft gemessene Festigkeiten. In Figur 2 ist das Gefüge der ungebehandelten Probe vor der Hochtemperaturbehandlung dargestellt.

Die an Stichproben gemessenen Festigkeiten σ sind außerdem vergleichend in Tabelle 1 gegenübergestellt.

Tabelle 1:

| Festigkeitsvergleiche nach Hochtemperaturzyklen bei 1400°C | | |
|---|---|---|
| **Probe** | **Zyklenzahl** | **σ [MPa]** |
| unbehandelt | 0 | 83,4 |
| unbehandelt | 40 | 108,4 |
| unbehandelt | 113 | 63,5 |
| unbehandelt | 136 | 14,1 |
| | | |
| einfach $AlOOH_{14\%ig}$ infiltriert | 150 | 100,6 |
| zweifach $AlOOH_{14\%ig}$ infiltriert | 155 | 108,6 |
| dreifach $AlOOH_{14\%ig}$ infiltriert | 190 | 105,7 |

Die Gewichtszunahmen und somit Oxidationsraten der mit AlOOH-Sol infiltrierten Proben zeigen im Laufe zunehmender Zyklenzahlen eine weitaus geringere Steigerung als die unbehandelten Proben. Der typische Wendepunkt im Oxidationsverhalten der unbehandelten R-SiC-Probe, der mit einem drastischen Festigkeitsabfall (Tabelle 1) und Gefügezerrüttung (Figur 3) verbunden ist, bleibt bei den infiltrierten R-SiC-Proben vorerst aus. Wie Figur 1 zeigt, ist selbst nach ca. 180 Zyklen kein Wendepunkt im Oxidationsverlauf der infiltrierten Proben erkennbar, so daß hier eine mindestens zweifache Lebensdauerverlängerung des R-SiC im zyklischen Hochtemperatureinsatz gegeben ist. Im Gegensatz zum behandelten R-SiC nach 185 Temperaturzyklen (Figur 4) ist das unbehandelte R-SiC bereits nach 115 Temperaturzyklen aufgrund beginnender Rißbildung im Gefüge (Figur 3) nicht mehr ausreichend tragfähig und muß als tragendes Bauteil ausgetauscht werden.

**Zyklische Oxidationstests von R-SiC bei 1550°C**

R-SiC-Proben wurden einfach und zweifach mit AlOOH-Sol, hergestellt aus hydrolisiertem AS1-(sek.)butylat (AlOOH-Konzentration 10 %) infiltriert. Die Gewichtszunahmen nach Trocknung bei 500°C betrügen 0,45 % bei einfacher und 0,95 % bei zweifacher AlOOH-Infiltration. Die Bauteile wurden mehrfachen Temperaturzyklen bei 1550°C mit 8h Haltezeit ausgesetzt. Figur 5 zeigt den jeweiligen Oxidationsverlauf anhand der gemessenen Gewichtszunahmen pro Hochtemperaturzyklus jeweils für unbehandelte, einfach und zweifach infiltrierte Proben.

Die Oxidationsraten der mit AlOOH-Sol infiltrierten Proben zeigen auch hier im Laufe zunehmender Zyklenzahlen ein analoges Verhalten zu den Oxidationstests in Beispiel 1. Die geschlossenen Oxidationsschutzschichten der infiltrierten R-SiC-Porenoberflächen stehen jeweils einer zerklüfteten Oxidationsschicht des unbehandelten R-SiC gegenüber. Die geringe Gewichtszunahme der infiltrierten Bauteile liegt in den geschlossenen Oxidationsschutzschichten auf den Porenoberflächen begründet, während die unbehandelten Proben eine stark zerklüftete Oxidschicht aufweisen, welche nach den einzelnen Hochtemperaturzyklen aufgrund des unterschiedlichen Wärmeausdehnungsverhaltens von SiC und $SiO_2$ aufreißen und frische SiC-Oberflächen zur ungehinderten Oxidation freilegen. Dieses typische Aufreißen der $SiO_2$-Schicht auf der Porenoberfläche wurde durch die in-situ-Reaktion des $Al_2O_3$ mit $SiO_2$ zu Mullit unterbunden.

**Zyklische Oxidationstests von R-SiC bei 1700°C**

R-SiC-Proben wurden einfach und zweifach mit $Zr(OH)_4$-Sol infiltriert. Das $Zr(OH)_4$-Sol wurde durch Hydrolysevon Zirkoniumbutylat hergestellt. Die $Zr(OH)_4$-Konzentration betrug 12 %. Die Gewichtszunahmen nach 500°C betrugen bei einfacher Infiltration 0,65% und bei zweifacher Infiltration 1,4 %.

Die Bauteile wurden mehrfachen Temperaturzyklen bei 1750°C mit 8h Haltezeit ausgesetzt. Figur 6 zeigt den jeweiligen Oxidationsverlauf anhand der gemessenen Gewichtszunahmen pro Hochtemperaturzyklus jeweils für unbehandelte, einfach und zweifach infiltrierte Proben. Analog den Beispielen 1 und 2 zeigen die infiltrierten R-SiC-Proben einen deutlich flacheren Anstieg des Gewichtszuwachses im Laufe der Oxidationszyklen als die unbehandelte Probe. Analog zu den vorhergehenden Beispielen zeigt sich anhand der unterschiedlichen Porenoberflächenbelegung, daß auch hier die unbehandelte R-SiC-Porenoberfläche eine typisch zerklüftete Morphologie aufweist. Die dazu im Vergleich stehende, mit $Zr(OH)_4$-Sol infiltrierte R-SiC-Probe hat infolge der in-situ-Reaktion mit dem $SiO_2$ zur $ZrSiO_4$ reagiert und eine geschlossene Oxidationsschutzschicht auf dem SiC gebildet.

**Zyklische Oxidation von N-SiC und RBSN bei 1400°C**

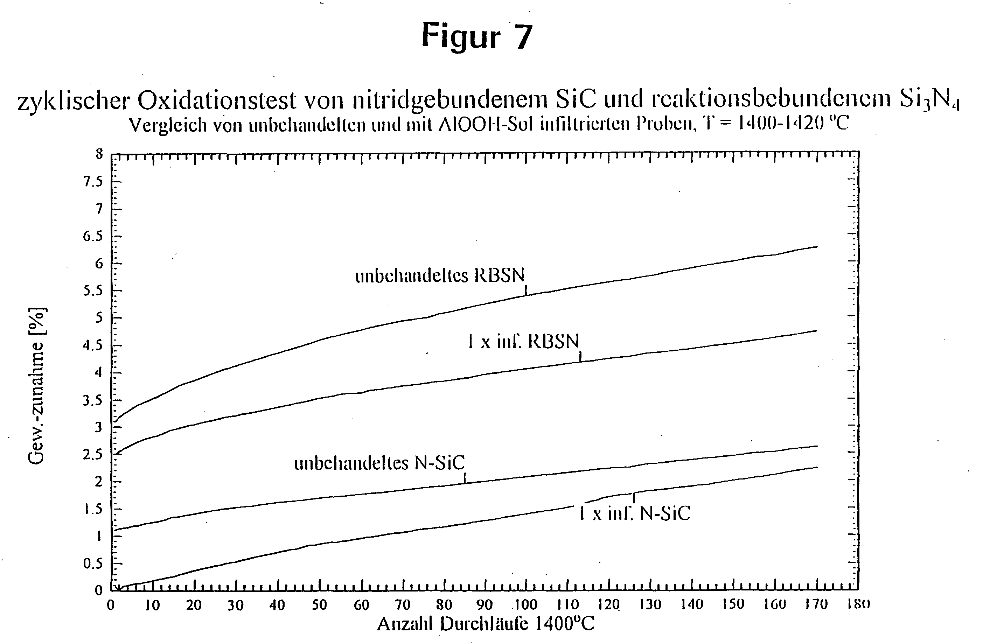

Die N-SiC- und RBSN-Proben wurden jeweils einfach mit einem AlOOH-Sol (10 %ig) infiltriert. Die Gewichtszunahmen der Proben nach der Trocknung bei 500°C betrugen bei N-SiC 0,77 % und bei RBSN 1,34 %. Die Bauteile wurden mehrfachen Temperaturzyklen bei 1400°C mit 3,3 h Haltezeit ausgesetzt. Figur 7 zeigt den jeweiligen Oxidationsverlauf anhand der gemessenen Gewichtszunahme pro Hochtemperaturyklus jeweils für unbehandelte und einfach infiltrierte Proben. Auch hier zeifen die durch Sol-Infiltration nachbehandelten N-SiC und RBSN Keramiken einen deutlich flacheren Anstieg des Gewichtszuwachses im Laufe der Oxidationszyklen als die unbehandelten Proben. Die grundsätzlich höhere Oxidationsrate der RBSN gegenüber dem N-SiC ist durch höhere offene Ausgangsporosität des RBSN mit ca. 25 Vol.-% im Vergleich zu ca. 15 Vol.-% beim N-SiC sowie einem feinerem Gefügeaufbau bedingt, Der langsamere Oxidationsfortschritt ist beim Solinfiltrierten N-SiC und RBSN durch eine reduzierte Oxidation der $Si_3N_4$-Bindematrix zu begründen. Die feinporöse $Si_3N_4$-Matrix bildet nach den ersten Hochtemperaturoxidationszyklen eine über das gesamte Bauteil geschlossene Oxidationsschutzschicht, die die fortlaufende Oxidation im Bauteilquerschnitt reduziert.

## Patentansprüche

1. Verfahren zur Herstellung eines Oxidationschutzes für poröse Keramiken auf der Basis von SiC und $Si_3N_4$, **dadurch gekennzeichnet, daß**

   ein mindestens eine Metallkomponente enthaltendes Sol in die Poreninnenräume der Keramik infiltriert, das Sol zu einem Gel gewandelt und die Keramik hochtemperaturbehandelt wird, wobei
   das Sol durch ein Vakuum- oder Druckinfiltrationsverfahren in die Poreninnenräume eingebracht wird, die Metallkomponente in einer Konzentration von 3 % bis 30 % im Sol vorliegt und das Sol auf eine Viskosität zwischen 10 und 300 mPas bei einem Schergefälle von 500 1/s eingestellt wird.

2. Verfahren zur Herstellung eines Oxidationsschutzes nach Anspruch 1, **dadurch gekennzeichnet, daß** eine poröse Keramik aus rekristallisiertem SiC (R-SiC), aus nitridgebundenem oder oxinitridgebundenem SiC (N-SiC) oder aus reaktionsgebundenem $Si_3N_4$ (RBSN) eingesetzt wird.

3. Verfahren zur Herstellung eines Oxidationsschutzes nach Anspruch 1 oder 2, **dadurch gekennzeichnet, daß** vor der Hochtemperaturbehandlung der Sol-Infiltrations-/Gelbildungszyklus mehrfach wiederholt wird.

4. Verfahren zur Herstellung eines oxidationsschutzes nach einem der vorhergehenden Ansprüche, **dadurch gekennzeichnet, daß** die Hochtemperaturbehandlung unter einer oxidierenden Atmosphäre durchgeführt wird.

5. Verfahren zur Herstellung eines Oxidationsschutzes nach einem der vorhergehenden Ansprüche, **dadurch gekennzeichnet, daß** die Hochtemperaturbehandlung bei einer Temperatur zwischen 1000 und 1700 °C durchgeführt wird.

6. Verfahren zur Herstellung eines Oxidationsschutzes nach einem der vorhergehenden Ansprüche, **dadurch gekennzeichnet, daß** als Metallkomponenten AlOOH, $Zr(OH)_4$ oder Mischungen davon eingesetzt werden.

7. Verfahren zur Herstellung eines Oxidationsschutzes nach einem der Ansprüche 1 bis 6, **dadurch gekennzeichnet, daß** das Sol durch Hydrolyse von Alkoxiden gebildet wird.

8. Verfahren zur Herstellung eines Oxidationsschutzes nach einem der Ansprüche 1 bis 6, **dadurch gekennzeichnet, daß** das Sol durch Dispergierung von Metallhydroxidpulver und/oder teilhydroxiertem Metalloxidpulver in Wasser gebildet wird.

9. Verfahren zur Herstellung eines Oxidationsschutzes nach einem der vorhergehenden Ansprüche, **dadurch gekennzeichnet, daß** das Gel durch Polykondensation des Sols gebildet wird.

10. Verfahren zur Herstellung eines Oxidationsschutzes nach einem der vorhergehenden Ansprüche, **dadurch gekennzeichnet, daß** die Gelbildung durch Elektrolytzugabe und/oder eine Temperaturbehandlung beeinflußt wird.

11. Verfahren zur Herstellung eines Oxidationsschutzes nach einem der vorhergehenden Ansprüche, **dadurch gekennzeichnet, daß** die Gelbildung durch eine Temperaturbehandlung zwischen 30 und 110 °C für eine Dauer von 30 Minuten bis 5 Stunden beeinflußt wird.

12. Verfahren zur Herstellung eines Oxidationsschutzes nach einem der vorhergehenden Ansprüche, **dadurch gekennzeichnet, daß** eine kristalline oder teilkristalline Festkörperphase gebildet wird.

13. Verfahren zur Herstellung eines Oxisationsschutzes nach Anspruch 12, **dadurch gekennzeichnet, daß** die kristalline oder teilkristalline Festkörperphase einen Wärmeausdehnungskoeffizienten zwischen $4{,}0x10^{-6}$ und $5{,}5x10^{-6}$ $K^{-1}$ (RT-1000 °C) besitzt.

14. Verfahren zur Herstellung eines oxidationsschutzes einem der vorhergehenden Ansprüche, **dadurch gekennzeichnet, daß** eine kristalline oder teilkristalline Festkörperphase aus $3\ Al_2O_3 \cdot 2\ SiO_2$ und/oder $ZrSiO_4$ gebildet wird.

## Claims

1. Method of manufacturing an anti-oxidation system for porous, SiC-based and $Si_3N_4$-based ceramics, **characterized in that** it comprises the steps of:

   infiltration of a sol containing at least one metal component into inner pore spaces of the ceramic,
   conversion of the sol to a gel and high-temperature treatment of the ceramic, where
   the sol is introduced into the inner pore spaces by a vacuum or a pressure infiltration method, the metal component is present in the sol at a concentration of 3% to 30% and the sol is set at a viscosity between 10 and 300 mPas at a shear gradient of 500 l/s.

2. Method of manufacturing an anti-oxidation system according to Claim 1, **characterized in that** recrystallised SiC (R-SiC), nitride-bound or oxynitride-bound SiC (N-SiC), or reaction-bound $Si_3N_4$ (RBSN) is used as the porous ceramic.

3. Method of manufacturing an anti-oxidation system according to Claim 1 or 2, **characterized in that** before the

high-temperature treatment, the sol infiltration/gel formation cycle is repeated a multiple number of times.

**4.** Method of manufacturing an anti-oxidation system according to any preceding claim, **characterized in that** the high-temperature treatment is carried out in an oxidizing atmosphere.

**5.** Method of manufacturing an anti-oxidation system according to any preceding claim, **characterized in that** the high-temperature treatment is carried out at a temperature between 1000 and 1700°C.

**6.** Method of manufacturing an anti-oxidation system according to any preceding claim, **characterized in that** AlOOH, $Zr(OH)_4$, or mixtures thereof are used as metal components.

**7.** Method of manufacturing an anti-oxidation system according to any of Claims 1 to 6, **characterized in that** the sol is formed by hydrolysis of alkoxides.

**8.** Method of manufacturing an anti-oxidation system according to any of Claims 1 to 6, **characterized in that** the sol is formed by dispersal of metal hydroxide powder and/or partly hydrated metal oxide powder in water.

**9.** Method of manufacturing an anti-oxidation system according to any preceding claim, **characterized in that** the gel is formed by polycondensation of the sol.

**10.** Method of manufacturing an anti-oxidation system according to any preceding claim, **characterized in that** the gel formation is influenced by the addition of electrolyte and/or a temperature treatment.

**11.** Method of manufacturing an anti-oxidation system according to any preceding claim, **characterized in that** the gel formation is influenced by a temperature treatment between 30 and 110°C for a period of 30 minutes to 5 hours.

**12.** Method of manufacturing an anti-oxidation system according to any preceding claim, **characterized in that** a crystalline or part-crystalline solid phase is formed.

**13.** Method of manufacturing an anti-oxidation system according to Claim 12, **characterized in that** the crystalline or part-crystalline solid phase has a heat expansion coefficient between $4.0x10^{-6}$ and $5.5x10^{-6}$ $K^{-1}$ (RT-1000°C).

**14.** Method of manufacturing an anti-oxidation system according to any preceding claim, **characterized in that** a crystalline or part-crystalline solid phase of $3Al_2O_3$ x $2SiO_2$ and/or $ZrSiO_4$ is formed.

## Revendications

**1.** Procédé pour la production d'une protection anti-oxydation pour céramiques poreuses à base de SiC et $Si_3N_4$, **caractérisé en ce qu'**un sol contenant au moins un composant métallique est infiltré dans les espaces internes des pores de la céramique, le sol est converti en un gel et la céramique est traitée à haute température, le sol étant introduit dans les espaces internes des pores par un procédé d'infiltration sous vide ou sous pression, le composant métallique étant présent à une concentration de 3 à 30 % dans le sol, et le sol étant ajusté à une viscosité comprise entre 10 et 300 mPa.s à une vitesse de cisaillement de 500 1/s.

**2.** Procédé pour la production d'une protection anti-oxydation selon la revendication 1, **caractérisé en ce qu'**on utilise une céramique poreuse à base de SiC recristallisé (R-SiC), à base de SiC lié à un nitrure ou lié à un oxynitrure (N-SiC) ou à base de $Si_3N_4$ lié par réaction (RBSN).

**3.** Procédé pour la production d'une protection anti-oxydation selon la revendication 1 ou 2, **caractérisé en ce qu'**on répète plusieurs fois le cycle d'infiltration de sol/gélification avant le traitement à haute température.

**4.** Procédé pour la production d'une protection anti-oxydation selon l'une quelconque des revendications précédentes, **caractérisé en ce que** le traitement à haute température est effectué sous une atmosphère oxydante.

**5.** Procédé pour la production d'une protection anti-oxydation selon l'une quelconque des revendications précédentes, **caractérisé en ce que** le traitement à haute température est effectué à une température comprise entre 1 000 et 1700°C.

6. Procédé pour la production d'une protection anti-oxydation selon l'une quelconque des revendications précédentes, **caractérisé en ce qu'**on utilise comme composant métallique AlOOH, $Zr(OH)_4$ ou des mélanges de ceux-ci.

7. Procédé pour la production d'une protection anti-oxydation selon l'une quelconque des revendications 1 à 6, **caractérisé en ce que** le sol est formé par hydrolyse d'alcoolates.

8. Procédé pour la production d'une protection anti-oxydation selon l'une quelconque des revendications 1 à 6, **caractérisé en ce que** le sol est formé par dispersion dans de l'eau d'une poudre d'hydroxyde métallique et/ou d'une poudre d'oxyde métallique partiellement hydroxylé.

9. Procédé pour la production d'une protection anti-oxydation selon l'une quelconque des revendications précédentes, **caractérisé en ce que** le gel est formé par polycondensation du sol.

10. Procédé pour la production d'une protection anti-oxydation selon l'une quelconque des revendications précédentes, **caractérisé en ce que** la gélification est influencée par addition d'électrolyte et/ou par un traitement thermique.

11. Procédé pour la production d'une protection anti-oxydation selon l'une quelconque des revendications précédentes, **caractérisé en ce que** la gélification est influencée par un traitement thermique entre 30 et 110°C pendant une durée de 30 minutes à 5 heures.

12. Procédé pour la production d'une protection anti-oxydation selon l'une quelconque des revendications précédentes, **caractérisé en ce qu'**une phase solide cristalline ou partiellement cristalline est formée.

13. Procédé pour la production d'une protection anti-oxydation selon la revendication 12, **caractérisé en ce que** la phase solide cristalline ou partiellement cristalline présente un coefficient de dilatation thermique compris entre $4,0 \times 10^{-6}$ et $5,5 \times 10^{-6}$ $K^{-1}$ (TA-1000°C).

14. Procédé pour la production d'une protection anti-oxydation selon l'une quelconque des revendications précédentes, **caractérisé en ce qu'**une phase solide cristalline ou partiellement cristalline à base de 3 $Al_2O_3$.2 $SiO_2$ et/ou $ZrSiO_4$ est formée.

# Figur 1

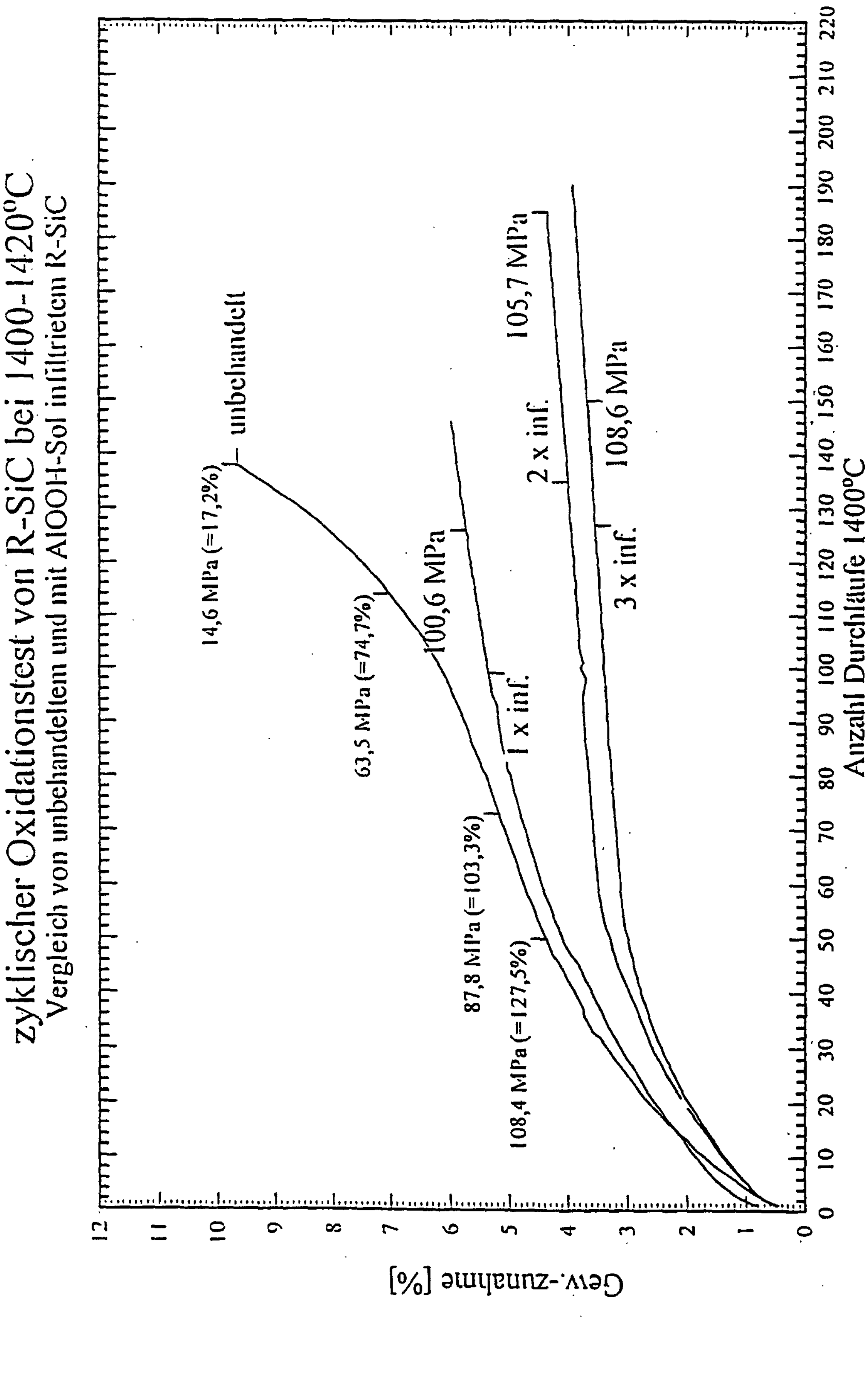
zyklischer Oxidationstest von R-SiC bei 1400-1420°C
Vergleich von unbehandeltem und mit AlOOH-Sol infiltrietem R-SiC
Gew.-zunahme [%]
Anzahl Durchläufe 1400°C
unbehandelt
14,6 MPa (=17,2%)
63,5 MPa (=74,7%)
87,8 MPa (=103,3%)
108,4 MPa (=127,5%)
100,6 MPa
1 x inf.
2 x inf.
105,7 MPa
3 x inf.
108,6 MPa

Figur 2

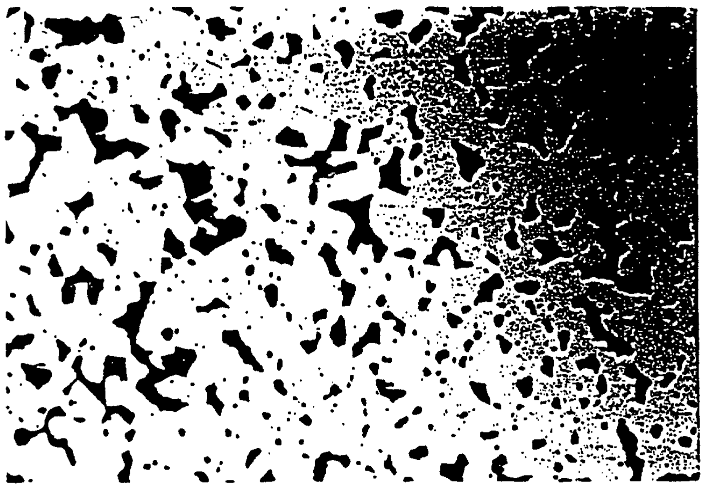

Figur 3

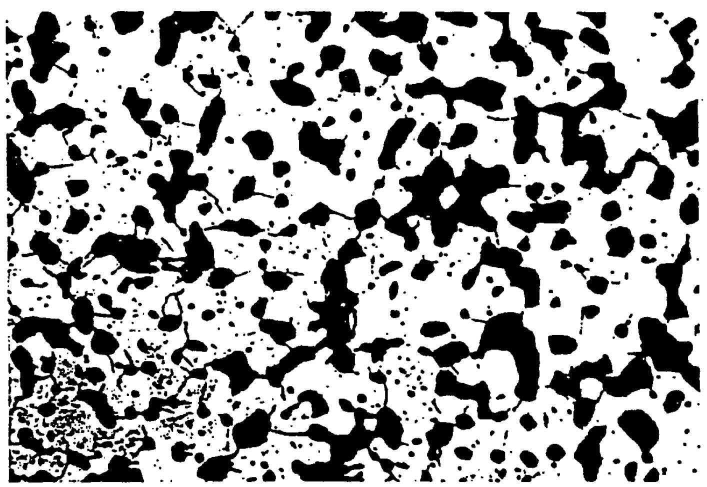

Figur 4

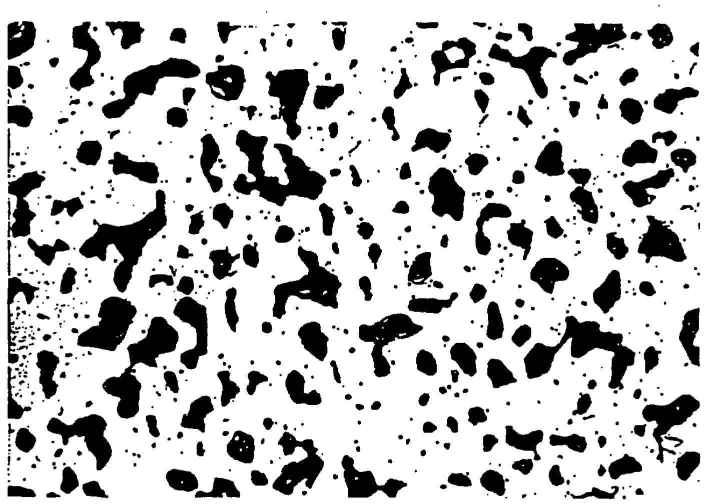

# Figur 5

zykilischer Oxidationstest von R-SiC bei 1500-1550°C
Vergleich von unbehandeltem und mit AlOOH-infiltriertem R-SiC

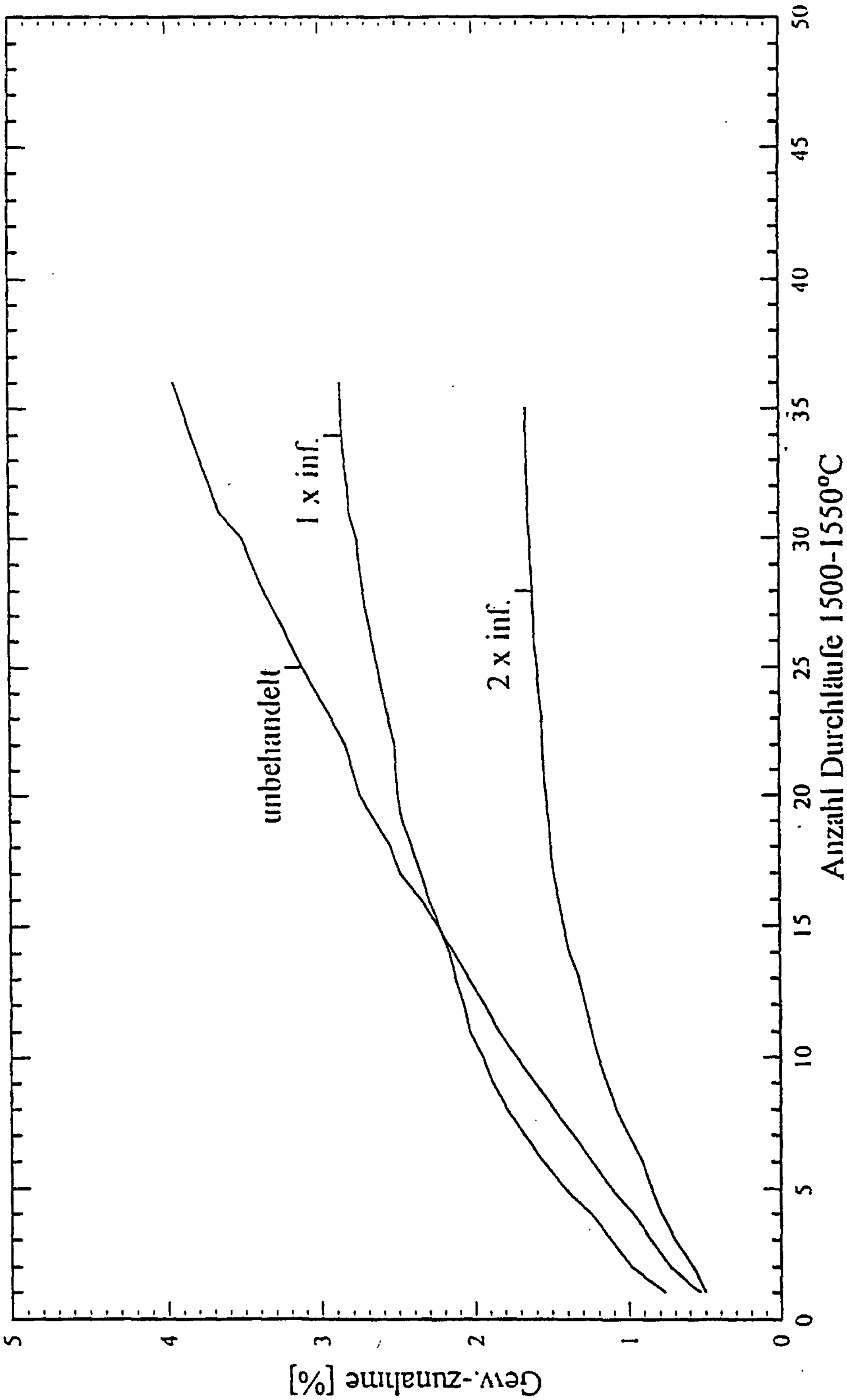

# Figur 6

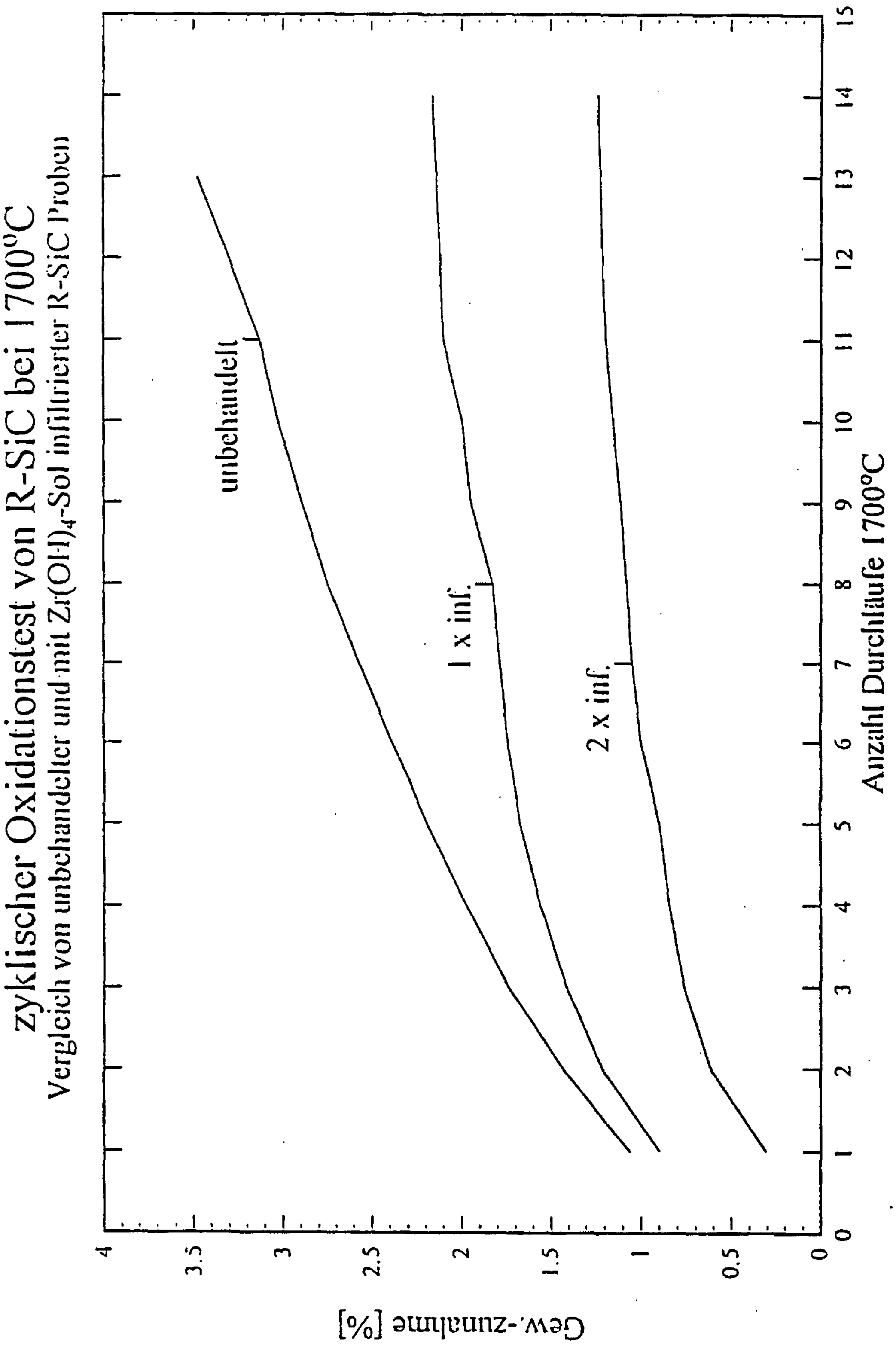
zyklischer Oxidationstest von R-SiC bei 1700°C
Vergleich von unbehandelter und mit Zr(OH)4-Sol infiltrierter R-SiC Proben
unbehandelt
1 x inf.
2 x inf.
Gew.-zunahme [%]
Anzahl Durchläufe 1700°C
0
0.5
1
1.5
2
2.5
3
3.5
4
0
1
2
3
4
5
6
7
8
9
10
11
12
13
14
15

# Figur 7

zyklischer Oxidationstest von nitridgebundenem SiC und reaktionsgebundenem $Si_3N_4$

Vergleich von unbehandelten und mit AlOOH-Sol infiltrierten Proben, T = 1400-1420 °C